# EUROPEAN PATENT SPECIFICATION

(11) **EP 3 783 749 B1**
(45) Date of publication and mention of the grant of the patent: **18.02.2026**
(21) Application number: 19784725.4
(22) Date of filing: 09.04.2019
(51) Int. Cl.: H01R 13/625, H01R 13/52, H01R 31/06, H04M 1/21, H04M 1/04, H04M 1/72409, H01R 24/00, H01R 24/68, H04M 1/02

(54) **CONNECTOR AND CONNECTION ADAPTER**
ANSCHLUSS UND ANSCHLUSSADAPTER
CONNECTEUR ET ADAPTATEUR DE CONNEXION

(30) Priority: 14.04.2018 JP 2018078043
(43) Date of publication of application: 24.02.2021
(73) Proprietor: Asterisk, Inc., Osaka-shi, Osaka 532-0011 (JP)
(72) Inventor: SUZUKI Noriyuki, Osaka-shi, Osaka 532-0011 (JP); KUMAMOTO Naoki, Osaka-shi, Osaka 532-0011 (JP)
(74) Representative: TBK
(86) International application number: PCT/JP2019/015531
(87) International publication number: WO 2019/198732

(56) References cited:
- DE-A1- 10 206 310
- JP-A- 2014 075 328
- JP-A- 2017 510 181
- US-A1- 2013 147 265
- US-A1- 2013 303 000
- US-A1- 2014 355 200
- US-A1- 2016 294 201
- US-A1- 2018 080 598

## Description

### Technical Field

The present invention relates to a connection adapter to connect a handheld terminal and its peripheral.

### Background Art

Recently, the development of applications for smartphones has progressed, and smartphones are used in various scenes. For example, a navigation application has been developed that uses the GPS built in a smartphone to acquire the current location and guides the way to the destination, and a driver attaches the smartphone with this application installed to the car to use it as car navigation. In this way, smartphones are used by being attached to another object in addition to being used alone.

Patent Literature 1 discloses an attachment structure to attach a smartphone to an object as described above. This attachment structure includes a plurality of projections formed on the cover of the smartphone and a plurality of projections on the object. The projections of the cover are formed along the inner peripheral surface of a circular through hole in the central portion of the cover. The plurality of projections of the object are formed along the outer peripheral surface of a columnar body screwed to the object. After the columnar body of the object is fitted into the through hole of the cover, the cover (smartphone) is rotated relative to the object so that these projections engage with each other and the smartphone attaches to the object.

Patent Literature 2 discloses a connector comprising a first connector on a mobile phone and a second connector on a stand forming a locking structure via pins and slots by rotation, and implies general electrical connections. In detail, Patent Literature 2 discloses a mechanical coupler configured to connect a mobile phone and a stand, the mechanical coupler comprising a first component to be placed on a back surface of the mobile phone, and a second component to be placed at the stand. The first component and the second component each have pins and slots respectively, configured to slide and rotate relatively to each other in a planar direction of the back surface of the mobile phone for mutually locking, and electrical contacts configured to electrically connect mutually.

Patent Literature 3 discloses a connector comprising a first connector on a portable electronic device and a second connector on a stand having a magnetic locking structure therebetween, and implies wired connections between the portable electronic device to a computing device. In detail, Patent Literature 3 discloses a portable electronic device and a stand including a computing device which can provide power to the portable electronic device for charging its battery.

Patent Literature 4 discloses a connector connecting a first connector on a mobile phone and a second connector an automobile console establishing a locking structure via slots and key connections, and electrical contacts via through button contacts. In detail, Patent Literature 4 discloses a connector configured to connect a mobile phone and an automobile console, the connector comprising a first connector to be placed on a back surface of the mobile phone, and a second connector to be placed at the automobile console. The first connector and the second connector each have a locking structure configured to slide and rotate relatively to each other in a planar direction of the back surface of the handheld terminal for mutually locking, and electrical contacts and electrical terminals configured to electrically connect.

Patent Literature 5 discloses a connector connecting a remote control unit having a battery, and a dashboard. In detail, Patent Literature 5 discloses a remote control unit carrying control keys and possessing in its back face a battery housing with central and peripheral power supply contacts, and also with signal transmission contacts. An active support carries a portion in relief suitable for penetrating into the housing of the unit to take the place of the power supply battery. Two power supply terminals are connected to a power supply line and arranged so as to bear against the respective power supply contacts of the unit when the portion in relief is inserted and locked in the housing of the unit, with the same applying for signal transmission terminals that are arranged on the portion in relief in positions that correspond to the transmission contacts of the unit.

### Citation List

### Patent Literature

Patent Literature 1: US 9243739 B
Patent Literature 2: US 2013/303000 A1
Patent Literature 3: US 2018/080598 A1
Patent Literature 4: DE 102 06 310 A1
Patent Literature 5: US 2013/147265 A1

### Summary of Invention

### Technical Problem

The above attachment structure of Patent Literature 1 enables the attachment of the smartphone to the object firmly. However, when the object functions as a peripheral of the smartphone, the formation of a communication path between the target and the smartphone is required. The above mechanical coupler of Patent Literature 2 may enable physical and electrical engagement of the mobile phone to the stand, but without sufficient security against water and dust.

In view of the above, the present invention provides a connection adapter according to the preamble of claim 1, further capable of securely fixing a handheld terminal and its peripheral and at the same time forming an enhanced security on a communication path. This object is achieved particularly by a connection adapter having a rubber O-ring, a plug-in connector, and a cable as claimed in the characterizing portion of the claim 1. Advantageous further developments are set out in the dependent claims.

### Solution to Problem

In view of the above, a connection adapter according to one aspect of the present invention is configured to connect a handheld terminal and a peripheral. The connector includes: a first connector to be placed on a back surface of the handheld terminal; and a second connector to be placed at the peripheral.

The first connector comprises a top case having a first annular protrusion and the second connector comprises an insertion having an annular portion. The first annular protrusion has a plurality of projections extending from an edge of the first annular protrusion. The annular portion has a plurality of arcuate projections along an outer circumference of the annular portion. The plurality of projections and the plurality of arcuate projections function as a locking structure configured to slide relatively in a planar direction of the back surface of the handheld terminal for mutually locking, when the insertion is inserted into the first annular protrusion and is slid and rotated relative to the first connector in a state where the handheld terminal and the peripheral have a posture without deviation between the handheld terminal and the peripheral. Terminals are configured to electrically connect mutually after the sliding.

The first connector comprises a second annular protrusion protruding annularly towards the annular portion. The second connector comprises a top plate. The annular portion comprises an annularly recessed groove around the top plate. A rubber O-ring is fitted into the annular groove, wherein the second annular protrusion is configured to press the rubber O-ring in a state where the first connector and the second connector are connected.
The connection adapter includes: the first connector as described above; a plug-in connector configured to be plugged in a terminal connector of the handheld terminal; and a cable that is configured to electrically connect the first connector and the plug-in connector.

The first connector may include a flat plate extending along the back surface of the handheld terminal, and the flat plate may have a thickness that is smaller than a thickness of the handheld terminal.

The locking structure may seal the terminals after locking.

### Advantageous Effects of Invention

The present invention enables fixation of the first connector and the second connector with the locking structure and at the same time enables an electrical contact between the terminals of the first connector and the second connector, and so securely fixing the handheld terminal and its peripheral while forming their very stable communication path.

### Brief Description of Drawings

Fig. 1 is a perspective view of a reading system according to the present embodiment;
Fig. 2 is a rear view of a handheld terminal to which a conversion adapter is attached, and a partially enlarged view of the conversion adapter;
Fig. 3 is a plan view of a reader to which a second connector is attached, and an enlarged perspective view of the second connector;
Fig. 4 is a cross-sectional view showing a connection mode between the first connector and the second connector, and an enlarged cross-sectional view a comparative example;
Fig. 5 shows connection adapters according to Modification Example 1;
Fig. 6 is a cross-sectional view of projections according to Modification Example 2;
Fig. 7 is an enlarged cross-sectional view showing a connection mode of the first connector and the second connector; and
Fig. 8 is an enlarged cross-sectional view showing a connection mode of the first connector and the second connector according to Modified Example 4.

### Description of Embodiments

The following describes one embodiment of a connection adapter according to the present invention while referring to the drawings, by way of a reading system that uses the information read from an information medium such as a barcode or a QR code (registered trademark).

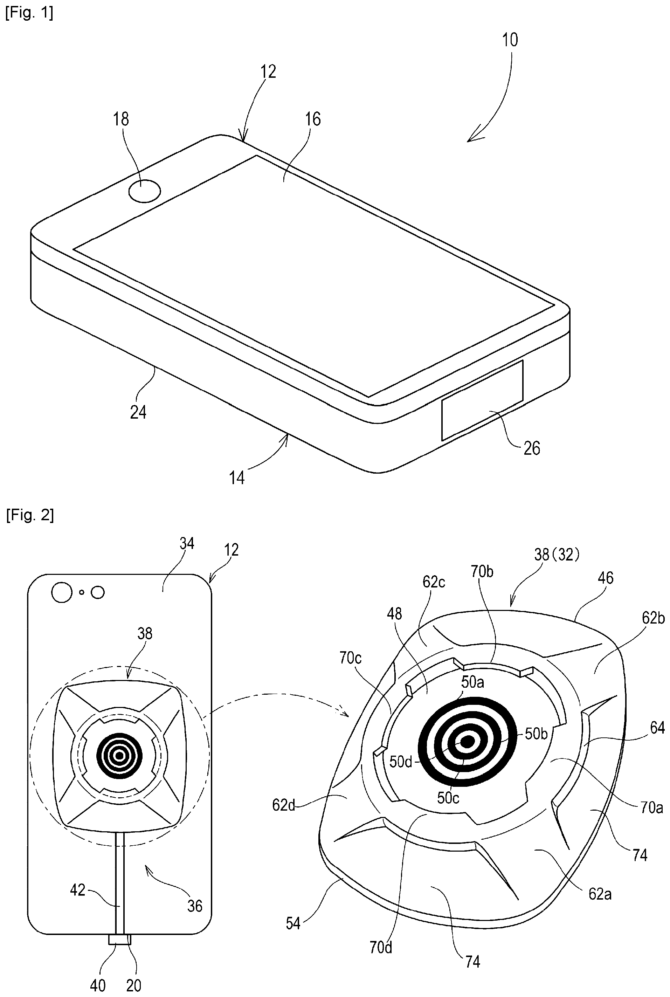

As shown in Fig. 1, a reading system 10 includes a handheld terminal 12 and a reader 14 attached to the handheld terminal 12. The reader 14 is a peripheral of the handheld terminal 12.

The handheld terminal 12 is an information processing terminal having a plate shape to let a user grasp, and is a well-known smart device such as a smartphone or a tablet terminal. The handheld terminal 12 of the present embodiment includes a liquid crystal display 16 on the front surface, and a push switch 18 below the liquid crystal display 16. The handheld device 12 includes a terminal connector 20 (Fig. 2) on a side face close to the push switch 18. A terminal at this terminal connector 20 is connected to a power circuit (not shown) or a control circuit including a CPU and a memory. A touch panel is overlaid on the liquid crystal display 16, and these liquid crystal display 16 and touch panel are controlled by the CPU.

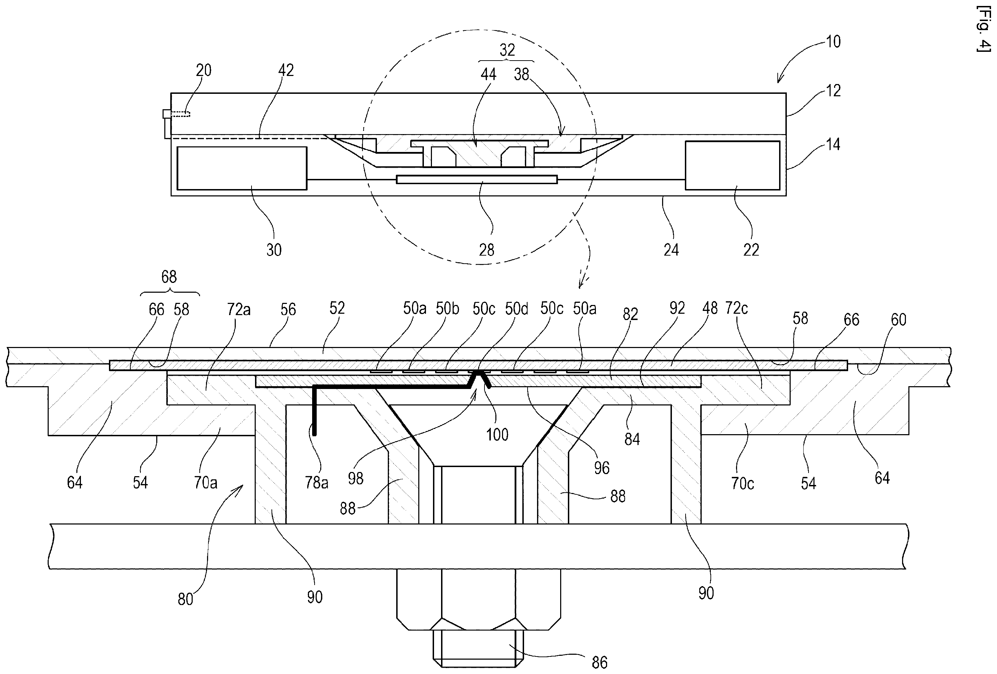

The reader 14 reads information from an information medium, and includes a box-shaped housing 24 that accommodates: an optical unit 22 (Fig. 4) that irradiates an information medium with light and receives the light reflected from the information medium to generate an electric signal; a microcomputer (not shown) that analyzes information from the electrical signal output from the optical unit 22; and a communication circuit (not shown) that establishes communication between the microcomputer and the handheld terminal 12. The optical unit 22 includes a light source that emits light and a sensor that receives light, and the light source and the sensor are placed behind a window 26 at an upper part of the housing 24. The microcomputer and the communication circuit are mounted on a board 28 (Fig. 4) that is placed in the center of the housing 24. These optical unit 22, microcomputer, and communication circuit operate with the power from a secondary battery 30 (Fig. 4) placed in the housing 24.

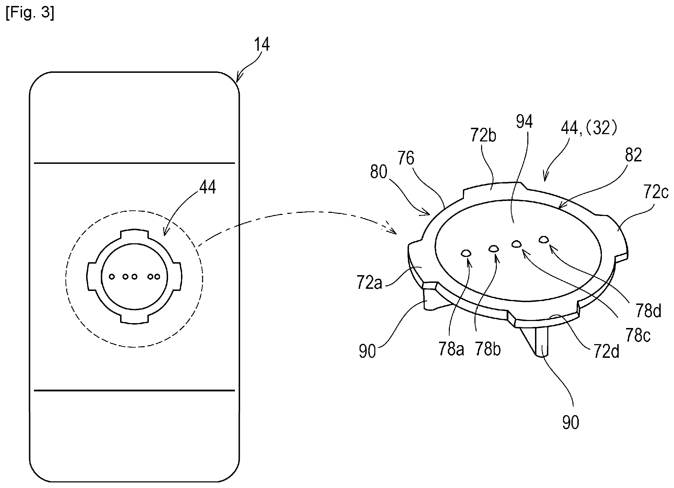

The handheld terminal 12 and the reader 14 are connected to each other via a connector 32 shown in Figs. 2 and 3.

Specifically, as shown in Fig. 2, the handheld terminal 12 comes with a connection adapter 36 on the back surface 34. The connection adapter 36 is to convert the terminal shape and holding structure of the terminal connector 20 of the handheld terminal 12, and includes a first connector 38; a plug-in connector 40 to be plugged in the terminal connector 20 of the handheld terminal 12; and a flat cable 42 that electrically connects the first connector 38 and the plug-in connector 40.

The first connector 38 is a component that electrically and physically connects to a second connector 44 (Fig. 3) of the reader 14 described later, and includes a plastic housing 46 that accommodates a disk-shaped board 48. The board 48 has a plurality of annular terminals 50a to 50d. These annular terminals 50a to 50d include patterned electrodes formed concentrically from the center of the board 48. This board 48 is housed in the housing 46 so that the back surface faces the handheld terminal 12.

As shown in FIG. 2 and FIG. 4, the housing 46 of the first connector 38 includes a base plate 52 and a top case 54. The base plate 52 is a rounded rectangular plate, and has a first face 56 to be attached to the back surface 34 of the handheld terminal 12 with an adhesive such as double-sided tape, and a second face 60 having a circular recess 58 at a center part for positioning of the above-mentioned board 48. Here, the second surface 60 of Fig. 4 without an annular protrusion 102 is a comparative example, which is not part of the claimed invention. The second surface 60 here with an annular protrusion 102 as described later is part of the claimed invention.

The top case 54 holds the board 48 while exposing the annular terminals 50a to 50d, and its peripheral edge has the same rectangular shape as that of the base plate 52. The top case 54 has inclined portions 62a to 62d each having a thickness gradually increasing from one of the four corners of the peripheral edge toward the central portion. The top case 54 has an annular protrusion 64 continuous to these inclined portions 62a to 62d at the central portion. The annular protrusion 64 has a circular recess 66 on the back surface. The circular recess 66 is formed so as to abut the peripheral edge of the board 48 that is positioned on the base plate 52. This configuration allows the board 48 to be held inside the annular protrusion 64 while exposing the annular terminals 50a to 50d. In this way, the circular recesses 58 and 66 formed in the top case 54 and the base plate 52, respectively, function as a holder 68 to hold the board 48 while exposing the terminals. A plurality of projections 70a to 70d extends from the edge of this annular protrusion 64. These projections 70a to 70d are formed along the inner circumference of the annular protrusion 64 and project toward the center of the annular protrusion 64. The plurality of projections 70a to 70d are formed at intervals so as to receive inserted projections 72a to 72d (Fig. 3) of the second connector 44 of the reader 14 described later. A portion 74 of the top case 54 surrounded by the annular protrusion 64 and the inclined portions 62a to 62d is a thin plate, and the back surface of this portion is attached to the base plate 52 with an adhesive. In this way, the first connector 38 is a thin plate extending along the back surface of the handheld terminal 12, and has a thickness (thickness of the annular protrusion) smaller than the thickness of the handheld terminal 12.

Referring to Figs. 3 and 4, the reader 14 comes with the second connector unit 44. The second connector 44 is a component that electrically and physically connects to the above-described first connector 38, and includes a plastic housing 76 that accommodates a plurality of contact terminals 78a to 78d.

The housing 76 of the second connector 44 includes an insertion 80 and a top plate 82. The insertion 80 is a portion to be inserted into the annular protrusion 64 of the first connector 38, and has: an annular portion 84; a plurality of arcuate projections 72a to 72d along the outer circumference of the annular portion 84; a screw receiver 88 along the inner circumference of the annular portion 84 to receive an inserted screw 86; and a rib 90 extending from the annular portion 84 to the insertion direction of the screw 86. This insertion 80 has a circular recess 92 on the surface of the annular portion 84, and the top plate 82 fits into this circular recess 92. The screw 86 penetrates through the housing of the reader 14 and is fixed with a bolt. Here, the annular portion 84 of Fig. 4 without an annularly recessed groove 104 is a comparative example, which is not part of the claimed invention. The annular portion 84 here with an annularly recessed groove 104 as described later is part of the claimed invention.

The top plate 82 is a round plate, and has a first face 94 to face the board 48 of the first connector 38 described above, and a second face 96 to be attached to the circular recess 92 of the annular portion 84 of the insertion 80 described above with an adhesive (not shown) such as double-sided tape. The plurality of contact terminals 78a to 78d are placed between the second face 96 and the circular recess 92.

The contact terminals 78a to 78d come in electrical contact with the above-mentioned annular terminals 50a to 50d, and each include a strip-shaped copper plate whose tip is bent like a peak. These contact terminals 78a to 78d are placed in parallel to each other with predetermined intervals (the intervals of the annular terminals 50a to 50d), and the peak portion 98 at the tip of each contact terminal 78a to 78d fits into a through hole 100 of the top plate 82 so that the apex of the peak portion 98 protrudes from the surface of the top plate 82. These apexes electrically connect to the annular terminals 50a to 50d of the first connector 38.

The insertion 80 of the second connector 44 is inserted into the annular protrusion 64 of the first connector 38, and is slid and rotated relative to the first connector 38 to physically connect to the first connector 38. The present embodiment is configured so that, in the state where the handheld terminal 12 and the reader 14 have an appropriate posture without deviation between them, the projections 72a to 72d of the insertion 80 engage with the projections 70a to 70d of the annular protrusion 64. In this way, the projections 70a to 70d and 72a to 72d of the first connector 38 and the second connector 44 function as a locking structure to lock these connectors.

The handheld terminal 12 and the reader 14 connect in this way via the first connector 38 and the second connector 44, and this makes up the reading system 10.

The reading system 10 starts the reading process in response to the execution by the CPU of a reading application stored in the memory of the handheld terminal 12. Upon starting of the reading process, a request signal output from the CPU of the handheld terminal 12 is transmitted to the reader 14 via the connection adapter 36. The request signal is input to the microcomputer of the reader 14 via the second connector 44. Upon reception of the request signal, the microcomputer of the reader 14 controls the optical module and analyzes the signal input from the optical module. Upon acquisition of information, the microcomputer of the reader 14 transmits the acquired information via the second connector 44. This information is input to the handheld terminal 12 via the connection adapter 36.

The connector 32 of the present embodiment is configured so that the engagement of the annular protrusion 64 of the first connector 38 and the insertion 80 of the second connector 44 enables a firm connection of the handheld terminal 12 and the reader 14, and at the same time the electrical contact of the annular terminals 50a to 50d and the contact terminal 78a to 78d forms a stable communication path between the handheld terminal 12 and the reader 14.

The connector 32 enables both the formation of a terminals' electrical connection and the maintaining of the connection due to the locking structure.

That is a description on the connection adapter 36 of the present invention by way of the embodiment, excluding the comparative examples of the second surface 60 without an annular protrusion 102 and the annular portion 84 without an annularly recessed groove 104. The present invention is not limited to the above-stated embodiment, and may be embodied as follows, for example.

### <Modification examples>

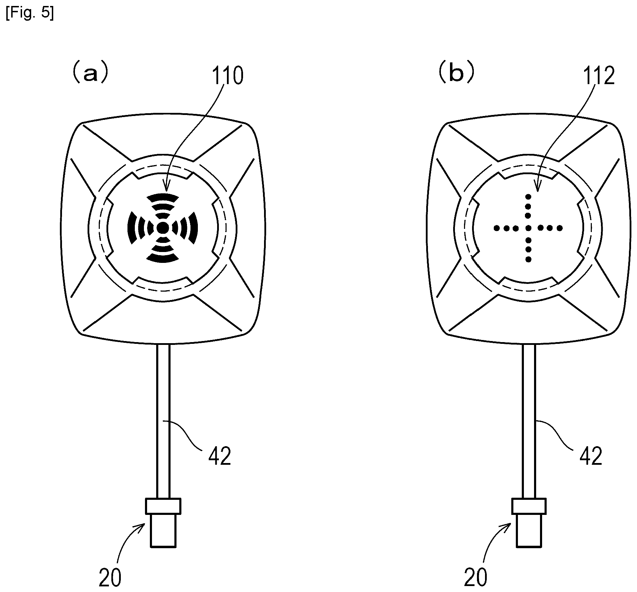

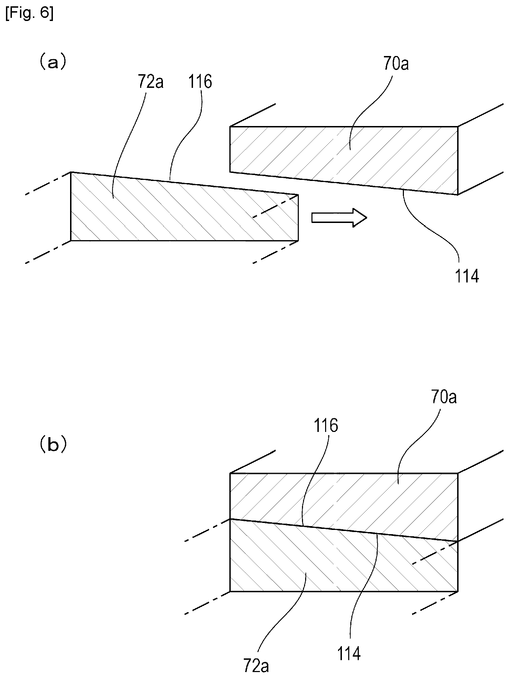

(1) The terminals of the board 48 of the first connector 38 are not limited to the concentric patterned electrodes. The present invention may be configured so that relative sliding and rotation of the first connector 38 and the second connector 44 electrically connects the terminals of the first connector 38 and the terminals of the second connector 44. In one example, as shown in Fig. 5(a), the terminals may have an arcuate pattern 110 arranged on concentric circles. In another example, as shown in Fig. 5(b), the terminals may have a point pattern 112. These plurality of patterns 112 are arranged in a cross shape with the same intervals as the intervals of the contact terminals 78a to 78d.
(2) As shown in Fig. 6, the projections 70a to 70d and 72a to 72d of the first connector 38 and the second connector 44 may have inclined engagement faces 114 and 116, respectively, for fastening after the sliding and rotation. Such fastening of the projections 70a to 70d of the first connector 38 to the projections 72a to 72d of the second connector 44 ensures firmer physical connection of the first connector 38 with the second connector 44. Such a firm physical connection means a firm connection of the terminals of the first connector 38 and the second connector 44, and so ensures their stable electrical connection.

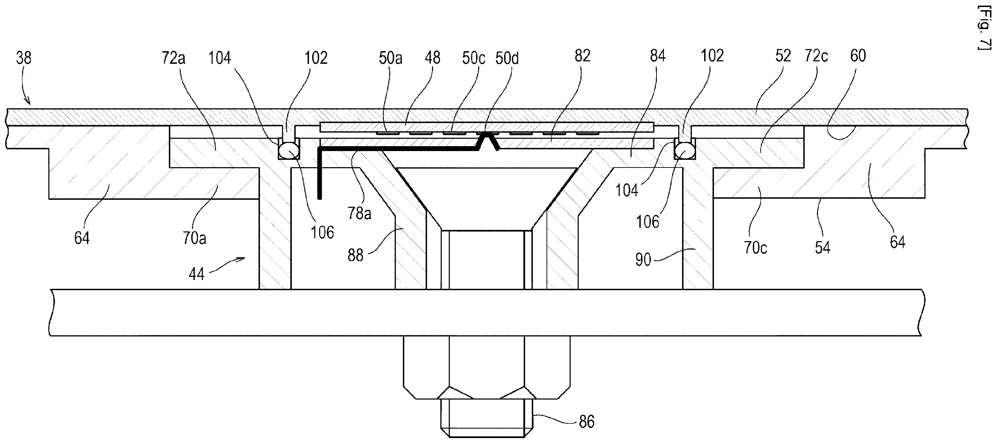

As shown in Fig. 7, the connectors have a waterproof function and a dustproof function for the contact points of the terminals. In this embodiment, an annular protrusion 102 protrudes annularly from the second face 60 of the base plate 52 around the board 48 of the first connector 38. The annular portion 84 of the second connector 44 has an annularly recessed groove 104 around the top plate 82, and a rubber O-ring 106 is fitted into this annular groove 104. These annular protrusion 102 and O-ring 106 are configured so that the annular protrusion 102 presses the O-ring 106 in the state where the first connector 38 and the second connector 44 are connected. This seals the terminals of the connector 32, and so gives waterproof and dustproof effects on the contact points of the terminals.

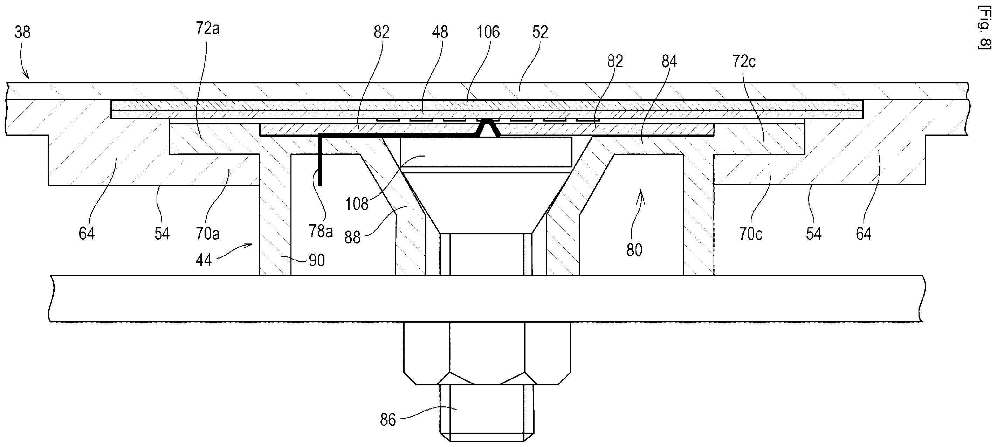

(4) As shown in Fig. 8, the connector may be configured to reinforce the connection. This embodiment includes an iron plate 106 between the board 48 and the base plate 52 of the first connector 38. Double-sided tape (not shown) is attached to each face of the iron plate 106, and the iron plate 106 and the board 48 are attached to the base plate 52 with this double-sided tape. A magnet 108 is placed on the back side of the top plate 82 of the second connector 44. This magnet 108 attracts the iron plate to reinforce the connection between the first connector 38 and the second connector 44.

(5) In the above-described embodiment and modification examples, the connection adapter is attached to the back surface of the handheld terminal 12. The present invention is not limited to this, and the connection adapter may be attached to the back surface of the cover of the handheld terminal 12. The connection adapter may be integral with the cover of the handheld terminal 12.

Any matters specifying the invention may be replaced with other techniques in an embodiment as long as the same action or effects are obtained from the embodiment.

For example, the peripheral is not limited to a reader that reads the above-mentioned barcode, and may read the information stored in a RF tag or the information stored in a card. The peripheral is not limited to these readers, and may be another device used together with a handheld terminal.

### Reference Signs List

12 Handheld terminal
14 Reader
20 Terminal connector
32 Connector
36 Connection adapter
38 First connector
40 Plug-in connector
42 Flat cable (cable)
44 Second connector
50a to 50d Annular terminal (terminal)
70a to 70d Projection (locking structure)
72a to 72d Projection (locking structure)
78a to 78d Contact terminal

## Claims

1. A connection adapter (36) comprising:
a connector (32) configured to connect a handheld terminal (12) and a peripheral (14), the connector comprising:
a first connector (38) to be placed on a back surface (34) of the handheld terminal (12); and
a second connector (44) to be placed at the peripheral (14),
the first connector (38) comprising a top case (54) having a first annular protrusion (64) and the second connector (44) comprising an insertion (80) having an annular portion (84),
the first annular protrusion (64) having a plurality of projections (70a, 70b, 70c, 70d) extending from an edge of the first annular protrusion (64),
the annular portion (84) having a plurality of arcuate projections (72a, 72b, 72c, 72d) along an outer circumference of the annular portion (84),
the plurality of projections (70a, 70b, 70c, 70d) and the plurality of arcuate projections (72a, 72b, 72c, 72d) functioning as a locking structure (70a, 70b, 70c, 70d, 72a, 72b, 72c, 72d) configured to slide relatively in a planar direction of the back surface (34) of the handheld terminal (12) for mutually locking, when the insertion (80) is inserted into the first annular protrusion (64) and is slid and rotated relative to the first connector (38) in a state where the handheld terminal (12) and the peripheral (14) have a posture without deviation between the handheld terminal (12) and the peripheral (14), and
terminals (50a, 50b, 50c, 50d, 78a, 78b, 78c, 78d) configured to electrically connect mutually after the sliding,
**characterized in that**
the first connector (38) comprises a second annular protrusion (102) protruding annularly towards the annular portion (84),
the second connector (44) comprises a top plate (82),
the annular portion (84) comprises an annularly recessed groove (104) around the top plate (82), and
a rubber O-ring (106) is fitted into the annular groove (104), wherein the second annular protrusion (102) is configured to press the rubber O-ring (106) in a state where the first connector (38) and the second connector (44) are connected; and
the connection adapter (36) further comprises:
a plug-in connector (40) configured to be plugged in a terminal connector (20) of the handheld terminal (12); and
a cable (42) that is configured to electrically connect the first connector (38) and the plug-in connector (40).

2. The connection adapter (36) according to claim 1, wherein the first connector (38) includes a flat plate (52) extending along the back surface of the handheld terminal (12), and the flat plate (52) has a thickness that is smaller than a thickness of the handheld terminal (12).

3. The connection adapter (36) according to claim 1 or 2, wherein the locking structure (70a, 70b, 70c, 70d, 72a, 72b, 72c, 72d) seals the terminals (50a, 50b, 50c, 50d, 78a, 78b, 78c, 78d) after locking.

## Patentansprüche

1. Verbindungsadapter (36), mit Folgendem:
einem Verbinder (32), der zum Verbinden eines Handterminals (12) und eines Peripheriegeräts (14) konfiguriert ist, wobei der Verbinder Folgendes umfasst:
einen ersten Verbinder (38), der auf einer Rückseite (34) des Handterminals (12) platziert wird; und
einen zweiten Verbinder (44), der am Peripheriegerät (14) platziert wird,
wobei der erste Verbinder (38) ein oberes Gehäuse (54) mit einem ersten ringförmigen Vorsprung (64) umfasst und der zweite Verbinder (44) eine Einsteckvorrichtung (80) mit einem ringförmigen Abschnitt (84) umfasst, wobei
der erste ringförmige Vorsprung (64) mehrere Vorsprünge (70a, 70b, 70c, 70d) aufweist, die sich von einer Kante des ersten ringförmigen Vorsprungs (64) erstrecken,
wobei der ringförmige Abschnitt (84) mehrere bogenförmige Vorsprünge (72a, 72b, 72c, 72d) entlang eines Außenumfangs des ringförmigen Abschnitts (84) aufweist,
wobei die Vielzahl von Vorsprüngen (70a, 70b, 70c, 70d) und die Vielzahl von bogenförmigen Vorsprüngen (72a, 72b, 72c, 72d) als eine Verriegelungsstruktur (70a, 70b, 70c, 70d, 72a, 72b, 72c, 72d) dienen, die konfiguriert ist, um relativ in einer ebenen Richtung der Rückseite (34) des Handterminals (12) gleiten zu können, um sich gegenseitig zu verriegeln, wenn die Einsteckvorrichtung (80) in den ersten ringförmigen Vorsprung (64) eingeführt und relativ zu dem ersten Verbinder (38) in einem Zustand verschoben und gedreht wird, in dem das Handterminal (12) und das Peripheriegerät (14) eine Stellung ohne Abweichung zwischen dem Handterminal (12) und dem Peripheriegerät (14) einnehmen, und
Anschlüsse (50a, 50b, 50c, 50d, 78a, 78b, 78c, 78d) vorgesehen sind, die konfiguriert sind, um nach dem Verschieben elektrisch miteinander verbunden zu werden,
**dadurch gekennzeichnet, dass**
der erste Verbinder (38) einen zweiten ringförmigen Vorsprung (102) umfasst, der sich ringförmig in Richtung des ringförmigen Abschnitts (84) vorwölbt,
der zweite Verbinder (44) eine obere Platte (82) umfasst,
der ringförmige Abschnitt (84) eine ringförmig vertiefte Nut (104) um die obere Platte (82) herum umfasst, und
ein Gummi-O-Ring (106) in die ringförmige Nut (104) eingepasst ist, wobei der zweite ringförmige Vorsprung (102) konfiguriert ist, um den Gummi-O-Ring (106) in einem Zustand zu drücken, in dem der erste Verbinder (38) und der zweite Verbinder (44) verbunden sind; und
der Verbindungsadapter (36) ferner Folgendes umfasst:
einen Steckverbinder (40), der konfiguriert ist, um in einen Anschlussstecker (20) des Handterminals (12) gesteckt zu werden; und
ein Kabel (42), das konfiguriert ist, um den ersten Verbinder (38) und den Steckverbinder (40) elektrisch zu verbinden.

2. Verbindungsadapter (36) gemäß Anspruch 1, wobei der erste Verbinder (38) eine flache Platte (52) aufweist, die sich entlang der Rückseite des Handterminals (12) erstreckt, und die flache Platte (52) eine Dicke hat, die kleiner ist als eine Dicke des Handterminals (12).

3. Verbindungsadapter (36) gemäß Anspruch 1 oder 2, wobei die Verriegelungsstruktur (70a, 70b, 70c, 70d, 72a, 72b, 72c, 72d) die Anschlüsse (50a, 50b, 50c, 50d, 78a, 78b, 78c, 78d) nach dem Verriegeln abdichtet.

## Revendications

1. Adaptateur de connexion (36) comprenant :
un connecteur (32) configuré pour connecter un terminal portable (12) et un périphérique (14), le connecteur comprenant :
un premier connecteur (38) destiné à être placé sur une surface arrière (34) du terminal portable (12) ; et
un deuxième connecteur (44) destiné à être placé sur le périphérique (14),
le premier connecteur (38) comprenant un boîtier supérieur (54) ayant une première saillie annulaire (64) et le deuxième connecteur (44) comprenant un insert (80) ayant une partie annulaire (84),
la première saillie annulaire (64) ayant une pluralité de projections (70a, 70b, 70c, 70d) s'étendant à partir d'un bord de la première saillie annulaire (64),
la partie annulaire (84) ayant une pluralité de saillies arquées (72a, 72b, 72c, 72d) le long d'une circonférence extérieure de la partie annulaire (84),
la pluralité de saillies (70a, 70b, 70c, 70d) et la pluralité de saillies arquées (72a, 72b, 72c, 72d) fonctionnant comme une structure de verrouillage (70a, 70b, 70c, 70d, 72a, 72b, 72c, 72d) configurée pour coulisser relativement dans une direction plane de la surface arrière (34) du terminal portable (12) pour se verrouiller mutuellement, lorsque l'insertion (80) est insérée dans la première saillie annulaire (64) et est glissée et tournée par rapport au premier connecteur (38) dans un état où le terminal portable (12) et le périphérique (14) ont une posture sans déviation entre le terminal portable (12) et le périphérique (14), et
des bornes (50a, 50b, 50c, 50d, 78a, 78b, 78c, 78d) configurées pour se connecter électriquement mutuellement après le glissement,
**caractérisé en ce que**
le premier connecteur (38) comprend une deuxième saillie annulaire (102) faisant saillie de manière annulaire vers la partie annulaire (84),
le deuxième connecteur (44) comprend une plaque supérieure (82),
la partie annulaire (84) comprend une rainure annulaire en retrait (104) autour de la plaque supérieure (82), et
une bague en caoutchouc (106) est insérée dans la rainure annulaire (104), dans lequel la deuxième saillie annulaire (102) est configurée pour presser la bague en caoutchouc (106) dans un état où le premier connecteur (38) et le deuxième connecteur (44) sont connectés ; et
l'adaptateur de connexion (36) comprend en outre :
un connecteur à fiches (40) configuré pour être enfiché dans un connecteur terminal (20) du terminal portable (12) ; et
un câble (42) qui est configuré pour connecter électriquement le premier connecteur (38) et le connecteur à fiches (40).

2. Adaptateur de connexion (36) selon la revendication 1, dans lequel le premier connecteur (38) comporte une plaque plate (52) s'étendant le long de la surface arrière du terminal portable (12), et la plaque plate (52) a une épaisseur qui est inférieure à l'épaisseur du terminal portable (12).

3. Adaptateur de connexion (36) selon la revendication 1 ou 2, dans lequel la structure de verrouillage (70a, 70b, 70c, 70d, 72a, 72b, 72c, 72d) scelle les bornes (50a, 50b, 50c, 50d, 78a, 78b, 78c, 78d) après le verrouillage.
